# FASCICULE DE BREVET EUROPEEN

(11) **EP 1 605 805 B1**
(45) Date de publication et mention de la délivrance du brevet: **28.02.2007**
(21) Numéro de dépôt: 03782529.6
(22) Date de dépôt: 07.11.2003
(51) Int. Cl.: A47J 42/04, A47J 42/24

(54) **MOULIN A CONDIMENTS**
GEWÜRZMÜHLE
CONDIMENT MILL

(30) Priorité: 17.03.2003 FR 0303215
(43) Date de publication de la demande: 21.12.2005
(73) Titulaire: PSP Industries SAS, 25440 Quingey (FR)
(72) Inventeur: FORNAGE, Jean-Claude, F-25000 Besancon (FR)
(74) Mandataire: Poupon, Michel
(86) Numéro de dépôt international: PCT/FR2003/003328
(87) Numéro de publication internationale: WO 2004/091355

(56) Documents cités:
- WO-A-00/28870
- BE-A- 469 899
- DE-U- 20 000 353
- US-A- 4 685 627
- US-A- 5 651 506

## Description

La présente invention concerne un moulin à condiments.

Elle se rapporte plus particulièrement à un moulin à condiments constitué de manière classique d'un réservoir dans lequel sont logés lesdits condiments sous forme de grains et d'un mécanisme de broyage, fixé au fond du réservoir, apte à être tourné par un utilisateur, destiné à moudre lesdits grains afin d'obtenir une poudre permettant de saupoudrer un aliment.

Le document BE-469 839 décrit les charactéristiques techniques du préambule de la revendication 1.

De tels moulins ne permettent pas d'assurer une mouture suffisante pour des condiments de grande dimension tels que les piments, les écorces d'agrumes, des gousses d'ail séchées etc. En effet, lors de l'introduction de tels condiments dans le moulin, celui-ci est difficile à actionner du fait notamment de la texture molle des condiments et la poudre obtenue n'est pas homogène.

Le but de l'invention est de proposer un moulin à condiments qui permet de résoudre tout ou partie des inconvénients précités.

A cet effet, la présente invention a pour objet un moulin à condiments, du type ail séché ou écorces d'agrumes, comprenant de manière classique un réservoir contenant les condiments, un mécanisme de broyage fixé au fond du réservoir et un bouton tournant placé à la partie supérieure du réservoir et relié au mécanisme de broyage, par l'intermédiaire d'un arbre désigné arbre d'entraînement, afin d'en assurer la rotation, ce moulin étant en outre pourvu au-dessus du broyeur, d'une lame de coupe fixée sur l'arbre d'entraînement, caractérisé en ce que le moulin est muni également d'un moyen de séparation du réservoir, en au moins deux compartiments, agencé à l'intérieur dudit réservoir et en ce que ce moyen de séparation est conformé en fonction de la taille des condiments afin de maintenir ceux-ci dans une position sensiblement verticale de manière à les cisailler par la lame de coupe.

Suivant quelques dispositions intéressantes de l'invention :
- le moyen de séparation est constitué d'une bague pourvue de moyens d'immobilisation en rotation destinée à être logée dans la partie supérieure du réservoir, d'un tube disposé coaxialement à l'intérieur de ladite bague et qui est relié à cette dernière par au moins deux parois verticales saillant du tube jusqu'à la périphérie de la bague,
- les moyens d'immobilisation en rotation de ladite bague sont constitués d'au moins un ergot saillant de la périphérie extérieure de la bague destiné à coopérer avec une encoche réalisée sur le corps du réservoir,
- le réservoir présente en coupe verticale une forme tronconique dont le sommet fictif du « V » du tronc de cône est situé au voisinage de la face d'appui du moulin.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue éclatée en perspective d'un moulin à condiments selon la présente invention,
- la figure 2 est une vue éclatée en coupe verticale du moulin selon la figure 1, et
- la figure 3 est une vue en perspective éclatée de différents séparateurs.

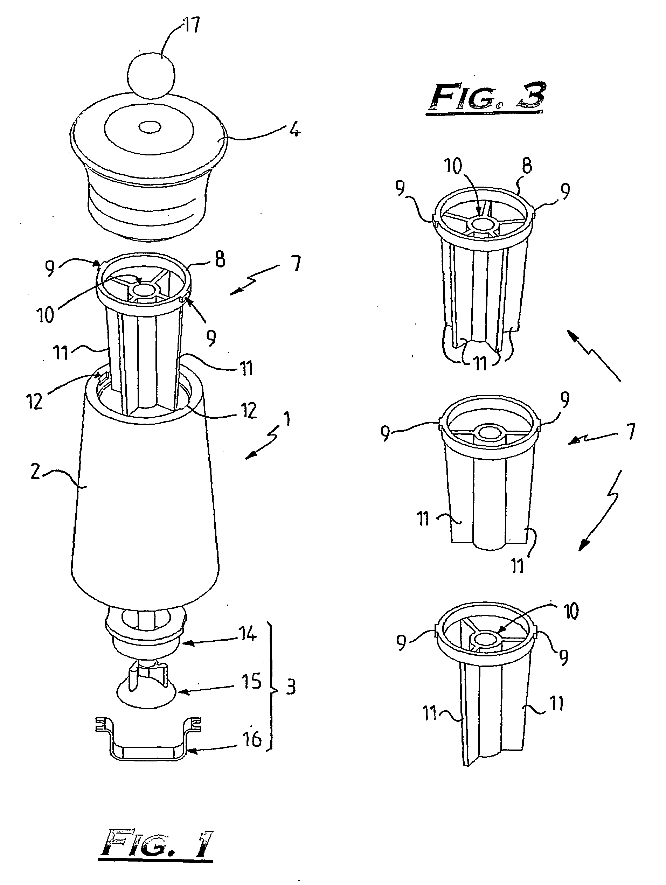

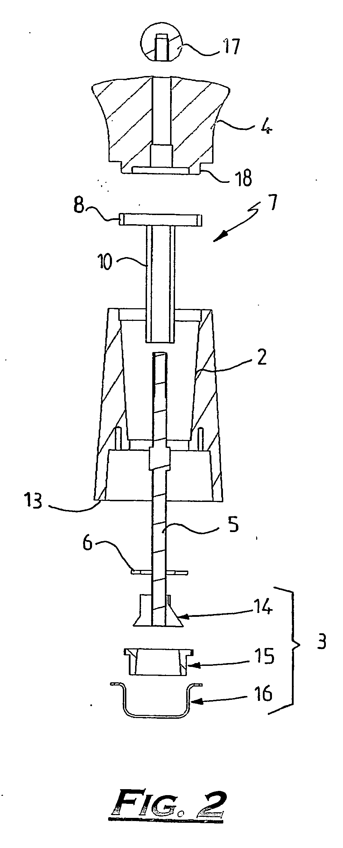

On peut voir en se reportant aux figures 1 et 2, un moulin 1 à condiments, du type ail séché ou écorces d'agrumes, etc... comprenant de manière classique un réservoir 2 contenant les condiments, un mécanisme de broyage 3 fixé au fond du réservoir 2 et un bouton tournant 4 placé à la partie supérieure du réservoir 2 et relié au mécanisme de broyage 3, par l'intermédiaire d'un arbre 5 désigné arbre d'entraînement, afin d'en assurer la rotation. De manière avantageuse, ce moulin 1 est pourvu, au-dessus du broyeur 3, d'une lame de coupe 6 fixée sur l'arbre d'entraînement 5 permettant ainsi de réduire en fines particules les condiments avant leur broyage.

Selon la présente invention, le moulin 1 est muni d'un moyen de séparation 7 du réservoir, en au moins deux compartiments, agencé à l'intérieur dudit réservoir 2. Ce moyen de séparation 7 est conformé en fonction de la taille des condiments afin de maintenir ceux-ci dans une position, sensiblement verticale, de manière à être cisaillés par la lame de coupe 6.

Selon un mode de réalisation préférentiel, représenté à titre non limitatif, le moyen de séparation 7 est constitué d'une bague 8 pourvue de moyens d'immobilisation 9 en rotation destinée à être logée dans la partie supérieure du réservoir 2, d'un tube 10 disposé coaxialement à l'intérieur de ladite bague 8 et qui est relié à cette dernière par au moins deux parois verticales 11 saillant du tube 10 jusqu'à la périphérie de la bague 8.

Les moyens d'immobilisation en rotation de ladite bague 8 sont constitués d'au moins un ergot 9 saillant de la périphérie extérieure de la bague 8 destiné à coopérer avec une encoche 12 réalisée sur le corps du réservoir 2.

Selon le mode de réalisation représenté, la bague 8 est munie de deux ergots 9 destinés à coopérer en position de montage avec deux encoches 12 réalisées en partie supérieure du corps du réservoir 2.

Il convient de noter que le réservoir 2 présente avantageusement, en coupe verticale, une forme tronconique dont le sommet fictif du « V » du tronc de cône est situé au voisinage de la face d'appui 13 du moulin 1, comme visible à la figure 2.

Une telle forme du réservoir 2 permet de limiter le jeu entre les condiments afin qu'ils puissent être maintenus en position verticale avant d'être réduits par la lame de coupe 6 en petits morceaux puis broyés.

Le mécanisme de broyage 3 logé dans la partie inférieure du réservoir 2 est constitué de manière classique, de l'arbre d'entraînement 5 dont l'une des extrémités est reliée à une roue de broyage 14 également désignée par le terme de poire qui coopère avec une couronne de broyage 15 positionnée au-dessus de celle-ci et qui est fixée dans une cavité, non visible, réalisée dans le réservoir 2. Une bride 16 est fixée à la partie inférieure du réservoir 2 par des vis afin d'immobiliser le mécanisme de broyage 3 sur le réservoir 2.

L'extrémité supérieure de l'arbre 5 est munie d'un filetage afin d'assurer la fixation du bouton 4 immobilisé sur l'arbre par un écrou 17. Cet écrou 17 assure en outre le réglage de la finesse de mouture.

De manière avantageuse, il convient de noter que le bouton 4 est muni d'une collerette périphérique 18 saillant vers le bas, en position d'assemblage du moulin, permettant de centrer le corps du bouton 4 à l'intérieur de la bague 8 du moyen de séparation 7.

Ce bouton 4 assure en outre la fermeture du réservoir 2 et permet par conséquent, par son simple démontage, le remplissage du réservoir 2 sans enlever le moyen de séparation 7.

Le fonctionnement du moulin à condiments va maintenant être décrit en liaison avec l'ensemble des figures 1 à 3.

L'utilisateur, en fonction du type de condiments et donc de leur taille, agence à l'intérieur du moulin le moyen de séparation 7 adéquat (comme visible sur la figure 3), à savoir, par exemple pourvu de deux, trois, quatre ou cinq compartiments. Pour ce faire, il dévisse l'écrou 17 afin de libérer le bouton 4 et enfile le tube 10 du moyen de séparation 7 sélectionné sur l'arbre d'entraînement 5 en positionnant en regard les ergots 9 de la bague 8 avec les encoches 12 réalisées sur le corps du réservoir 2.

L'utilisateur peut alors disposer dans une position sensiblement verticale les condiments dans chaque compartiment avant de replacer le bouton 4 et revisser l'écrou 17 sur l'arbre d'entraînement 5.

Le moulin est ainsi prêt à être utilisé pour broyer en une fine poudre les condiments. On comprend qu'à chaque rotation du bouton lié en rotation à l'arbre d'entraînement 5 les condiments vont subir préalablement l'action de la lame de coupe destinée à les réduire en morceaux avant de les évacuer vers le broyeur.

Lors de la phase de coupe, on notera que les parois du moyen de séparation maintiennent les condiments afin d'éviter que ceux-ci ne se couchent et échappent à la lame.

La lame de coupe 6 peut être constituée d'une lame à trois, quatre ou cinq pales dont chaque pale est pourvue d'un chanfrein pour pousser les condiments vers le broyeur.

On comprend à la lecture de la description ci-dessus que le moulin à condiments de la présente invention est relativement simple à réaliser et permet de broyer des produits dont la texture est « molle », sans que cela nuise au bon fonctionnement du moulin.

Bien que l'invention ait été décrite en liaison avec un mode de réalisation particulier elle comprend tous les équivalents techniques des moyens décrits.

## Revendications

1. Moulin à condiments, du type ail séché ou écorces d'agrumes, comprenant de manière classique un réservoir (2) contenant les condiments, un mécanisme de broyage (3) fixé au fond du réservoir (2) et un bouton tournant (4) placé à la partie supérieure du réservoir (2) et relié au mécanisme de broyage (3), par l'intermédiaire d'un arbre (5) désigné arbre d'entraînement, afin d'en assurer la rotation, ce moulin (1) étant en outre pourvu au-dessus du broyeur (3), d'une lame de coupe (6) fixée sur l'arbre d'entraînement (5), **caractérisé en ce que** le moulin est muni également d'un moyen de séparation du réservoir, en au moins deux compartiments, agencé à l'intérieur dudit réservoir (2) et **en ce que** ce moyen de séparation (7) est conformé en fonction de la taille des condiments afin de maintenir ceux-ci dans une position sensiblement verticale de manière à les cisailler par la lame de coupe (6).

2. Moulin à condiments selon la revendication 1, **caractérisé en ce que** le moyen de séparation (7) est constitué d'une bague (8) pourvue de moyens d'immobilisation en rotation (9) destinée à être logée dans la partie supérieure du réservoir (2), d'un tube (10) disposé coaxialement à l'intérieur de ladite bague (8) et qui est relié à cette dernière par au moins deux parois verticales (11) saillant du tube (10) jusqu'à la périphérie de la bague (8).

3. Moulin à condiments selon la revendication 2, **caractérisé en ce que** les moyens d'immobilisation en rotation de ladite bague (8) sont constitués d'au moins un ergot (9) saillant de la périphérie extérieure de la bague (8) destiné à coopérer avec une encoche (12) réalisée sur le corps du réservoir (2).

4. Moulin à condiments selon l'une quelconque des revendications précédentes, **caractérisé en ce que** le réservoir (2) présente en coupe verticale une forme tronconique dont le sommet fictif du « V » du tronc de cône est situé au voisinage d'une face d'appui (13) du moulin.

## Claims

1. Condiment mill, of the dried garlic or vegetable spices type, comprising, in conventional manner, a container (2) containing the condiments, a grinding mechanism (3) secured to the base of the container (2), and a rotating button (4), which is positioned on the upper portion of the container (2) and connected to the grinding mechanism (3), through the intermediary of a spindle (5) called an entrainment spindle, in order to ensure the rotation thereof, this mill (1) in addition being provided, above the grinder (3), with a cutting blade (6) secured on the entrainment spindle (5), **characterised in that** the mill is also provided with a means for separating the container into at least two compartments, which means is fitted within said container (2), and **in that** this separating means (7) is designed according to the size of the condiments, in order to maintain said condiments in a substantially vertical position so as to snip them by the cutting blade (6).

2. Condiment mill according to claim 1, **characterised in that** the separating means (7) is made up of a ring (8), which is provided with means for rotational immobilisation (9) and is intended to be housed in the upper portion of the container (2), and of a tube (10), which is disposed coaxially within said ring (8) and is connected to said ring by at least two vertical walls (11) projecting from the tube (10) as far as the periphery of the ring (8).

3. Condiment mill according to claim 2, **characterised in that** the means for rotationally immobilising said ring (8) are made up of at least one lug (9), which projects from the external periphery of the ring (8) and is intended to co-operate with a notch (12) provided on the body of the container (2).

4. Condiment mill according to any of the preceding claims, **characterised in that** the container (2) is in the form of a truncated cone when viewed in vertical section, the imaginary apex of the "V" of the frustum of the cone of which form is situated in the vicinity of a supporting face (13) of the mill.

## Patentansprüche

1. Gewürzmühle zum Mahlen von Gewürzen wie getrockneter Knoblauch oder Schalen von Zitrusfrüchten mit einem herkömmlichen, Gewürze enthaltenden Behälter (2), einem am Boden des Behälters (2) befestigten Mahlwerk (3) und einem am oberen Teil des Behälters (2) angeordneten Drehknopf (4), der über eine als Antriebswelle ausgebildete Welle (5) mit dem Mahlwerk (3) zu dessen Drehung verbunden ist, wobei die Mühle (1) über dem Mahlwerk (3) weiterhin ein an der Antriebswelle (5) befestigtes Schneidmesser (6) aufweist, **dadurch gekennzeichnet, dass** die Mühle außerdem ein Mittel zur Trennung des Behälters in mindestens zwei, im Innern des Behälters (2) angeordnete Abteile aufweist und dass das Trennmittel (7) der Größe der Gewürze entsprechend ausgebildet ist, um sie in einer im wesentlichen senkrechten Lage zu halten, sodass sie von dem Schneidmesser (6) geschnitten werden.

2. Gewürzmühle nach Anspruch 1, **dadurch gekennzeichnet, dass** das Trennmittel (7) aus einem im oberen Teil des Behälters (2) untergebrachten Ring (8) mit Mitteln zur Drehsicherung (9) und einem koaxial im Innern des Ringes (8) angeordneten Rohr (10) besteht, das mit dem Ring durch mindestens zwei, aus dem Rohr (10) vorstehende, bis zum Umfang des Ringes (8) reichende senkrechte Wände (11) verbunden ist.

3. Gewürzmühle nach Anspruch 2, **dadurch gekennzeichnet, dass** die Mittel zur Drehsicherung (9) des Ringes (8) aus mindestens einer, aus dem Außenumfang des Ringes (8) vorstehenden Nase besteht, die mit einer am Körper des Behälters (2) vorgesehenen Nut (12) zusammenwirkt.

4. Gewürzmühle nach einem der vorhergehenden Ansprüche, **dadurch gekennzeichnet, dass** der Behälter (2) im vertikalen Schnitt eine Kegelstumpfform aufweist, deren fiktive Spitze des "V" des Kegelstumpfes zu einer Stützfläche (13) der Mühle benachbart verläuft.
